# EUROPEAN PATENT APPLICATION

(11) **EP 1 405 569 A1**
(43) Date of publication of application: **07.04.2004**
(21) Application number: 02447189.8
(22) Date of filing: 04.10.2002
(51) Int. Cl.: A23J 1/10, A23K 1/04, A23K 1/10, B01D 43/00, C02F 1/40, C08L 89/04, C11B 13/00

(54) **Method and apparatus for reducing pressure after sterilisation in a rendering process**

(71) Applicant: V.W.V. NV, 8630 Veurne (BE)
(72) Inventor: Jacobs, Freddy., B-9031 Drongen (BE)
(74) Representative: Bird, William Edward

(57) **Abstract**

A pressure reducing apparatus for connection to a pressurised vessel for reducing the pressure of pressurized animal waste is described. It comprises a variable volume pressure storage accumulator having an input and an output for accumulating the pressurized animal waste at a first pressure and for discharging the accumulated pressurized animal waste at a second lower pressure.

A valve system connected to the inlet and outlet of the accumulator and to the outlet of the pressurised vessel is provided for controlling flow of pressurized animal waste from the pressurised vessel to the variable volume pressure storage accumulator and for controlling flow of pressurized animal waste from the accumulator outlet.

A control means controls the operation of the valve system so that in a first phase the pressurized animal waste is transferred from the pressurised vessel and accumulated in the accumulator at the first pressure and in a second phase the pressurized animal waste is prevented from entering the accumulator from the pressurised vessel and is released from the accumulator outlet at the second pressure.

## Description

The invention relates to a method and apparatus for the continuous in-line expansion of a heterogeneous substance including a fluid and a solid fraction. The invention also relates to a method and a series of devices for the processing of natural wastes, e.g. rendering by-products from slaughtering and/or offal of animal origin, e.g. offal and carcasses, or vegetable wastes. The technology is primarily meant for use in or alongside slaughterhouses, meat preparation and meat processing factories and everywhere where the by-products and waste products are directly processed into stabilised and sterilised saleable end products, i.e. animal fat and cake.

### Technical Background

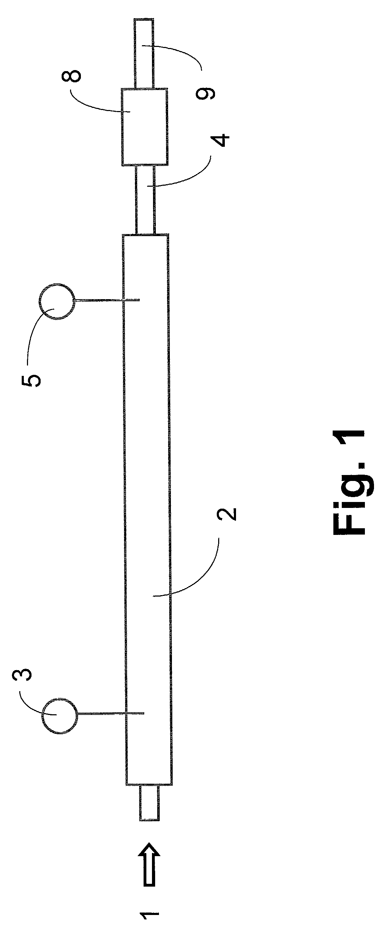

In a rendering process the sterilisation process should be maintained under predefined pressures and temperatures. For example in the European Council Directive 90/667/EEC, 27 November, 1990, Annex II, chapter II, section 6, it states that high risk animal waste must be processed to a core temperature of 133°C for 20 minutes at a pressure of 3 bar. The particle size to be processed must be reduced to at least 50 mm. A conventional tubular steriliser and downstream expander is shown schematically in Fig. 1. It comprises an input 1, e.g. from a pump, a steriliser 2 such as a tubular steriliser operating at an elevated pressure and temperature, a pressure monitoring system such as pressure sensors 3 and 5, an output 4 of the steriliser and a downstream expander 8 having an outlet 9 for discharging sterilised product at a lower pressure, e.g. atmospheric pressure.

WO91/03305 describes a pressurised system for extracting fat and/or protein from a liquid. The system includes a pressure reducing device (expander) which does not contain valves. The expander comprises an outer rigid tube and an inner flexible tube. By introducing air pressure between the outer rigid tube and the inner flexible tube, the inner tube can be compressed and thus throttle the flow of liquid. The advantage of this device is said to be that no dead spaces are created in which material could begin to decompose over a long time and thus contaminate the product. This known device has a limited pressure holding capacity particularly when the liquid has a low viscosity. Further, in the case of rendered materials, the processed product contains pieces of harder material such as bone which the known expander cannot process well without pressure loss in the steriliser.

EP 931 578 describes a further known expander. This expander attempts to address the problems with the known expander of WO 91/03305. One particular problem with rendering animal wastes at small throughputs is that the input material varies widely, e.g. hair, skin, bone, fat, meat. Where the throughput of the system is low there is little homogenisation of the processed product and the viscosity of the processed product varies considerably. In particular where plug flow is used in a continuous tubular steriliser, input material tends to stay together and not to be homogenised as would occur in a large batch processor. Thus, processed material may vary considerably over the length of the steriliser including sections with a large fraction of liquid, e.g. fat and/or water as well as high viscosity portions, e.g. with a lot of collagen. When such a liquid portion reaches the expander, the expander operation can become unstable and pressure may be lost temporarily in the steriliser. It is preferred to monitor pressures and temperatures in the steriliser to prove conformity with regulations and the loss of pressure and/or temperature requires remedial action. If the problem has occurred during a time when the system was not manned, a considerable amount of material may have to be reprocessed after such a pressure loss. The system of '578 attempts to address these problems by first using a batch preheater before the steriliser to partially homogenise the material. Secondly, the expander is designed to bleed off liquid already at the expander while trying to leave a paste portion of uniform consistency which can then be released by a valve. For normal liquid, homogeneous media static adjustable throttle valves or rotating valves can be used. However, for the heterogeneous, paste-like material to be removed from this expander more expansive valves are necessary, e.g. a fast working slide valve. The removal of the liquid portion is carried out at a lower pressure than the release pressure of the paste portion. Thirdly, a pressure stabiliser is attached to the tubular steriliser to stabilise the pressure despite intermittent operation of the slide valve of the expander. In practice it has been found to be difficult to control this known expander well enough that pressure fluctuations in the tubular steriliser are within those required by the regulations.

Previously known continuous in-line rendering systems with relatively low flow rates of the main medium cannot efficiently and accurately achieve an expansion from a high to a low pressure and at the same time maintain pressure reliably in the steriliser.

A further object of the present invention is to provide a rendering system, especially a low-throughput rendering system with a pressurised steriliser and a downstream expander which allows a better control of the sterilisation pressure.

The present invention provides an expander for reducing the pressure of processed animal wastes. Contrary to known systems, the present invention makes use of a discontinuous expansion element in the expander. The discontinuous operation allows the use of valves with lower complexity even if the processed material varies greatly in viscosity as well as improving pressure control in the steriliser. Further no loss or separation of material has to occur in the expander thus avoiding the complexity of separation and pressure reduction in the same device. The discontinuous expansion element comprises a variable but closed volume so that the rate of transfer of material to the element can be controlled precisely which also means that changes in upstream pressure can be controlled more easily. In a first time period a discontinuous accumulating element in the expander accumulates material from a pressurised vessel and in a second time period the material is released at a lower pressure. Several elements may be ganged together and operated out of phase of each other so that the output is continuous.

Accordingly, the present invention provides a pressure reducing apparatus for connection to a pressurised vessel for reducing the pressure of pressurized animal waste released from the vessel, comprising:
a variable volume pressurisable accumulator unit having an input and an output for accumulating the pressurized animal waste at a first pressure and for discharging the accumulated pressurized animal waste at a second lower pressure,
a valve system connected to the inlet and outlet of the accumulator unit and to the outlet of the pressurised vessel for controlling flow of pressurized animal waste from the pressurised vessel to the variable volume pressurisable accumulator unit and for controlling flow of pressurized animal waste from the outlet of the accumulator unit, and
control means for controlling the operation of the valve system so that in a first phase the pressurized animal waste is transferred from the pressurised vessel and accumulated in the accumulator unit at the first pressure and in a second phase the pressurized animal waste is prevented from entering the accumulator unit from the pressurised vessel and is released from the outlet of the accumulator unit at the second pressure. Preferably, the valve system isolates the accumulator unit from the pressurised vessel as well as from external during the time of transfer from phase one to phase two. A means to control the rate of transfer of pressurized animal waste from the pressurised vessel to the accumulator unit can be provided. The control means can control the operation of the valve system so that the waste material is released from the outlet of the accumulator unit when the accumulator unit has received a predetermined volume of material from the pressurised vessel. Alternatively, the control means can control the operation of the valve system so that the waste material is released from the outlet of the accumulator unit when a pressure in the accumulator unit has reached a predetermined value. The accumulator unit preferably includes a piston and cylinder. The pressurised vessel can be a steriliser and the animal waste is then sterilised animal waste.

The present invention includes a rendering system for animal wastes including a pressure reducing apparatus as described above.

The present invention also provides a method of reducing pressure of pressurized animal waste from a pressurised vessel comprising:
in a first phase accumulating the pressurized animal waste from the pressurised vessel at a first pressure in a variable volume pressurisable accumulator unit, in a second phase preventing the pressurized animal waste from entering the accumulator unit from the pressurised vessel and discharging the accumulated sterilized pressurized animal waste at a second lower pressure. The method may further comprise controlling the rate of transfer of pressurized animal waste from the pressurised vessel to the accumulator unit. The method may further comprise releasing the animal waste from the outlet of the accumulator unit when the accumulator unit has received a predetermined volume of material from the pressurised vessel. The method may further comprise releasing the animal waste from the outlet of the accumulator when a pressure in the accumulator unit has reached a predetermined value.

The present invention will now be described with reference to the following drawings.

### Brief description of the drawings

Fig. 1 is a schematic view of a conventional tubular steriliser and downstream expander.
Fig. 2 is a schematic illustration of a steriliser and downstream expander according to a first embodiment of the present invention.
Fig. 3 is a schematic illustration of a second embodiment of the present invention which is one implementation of the steriliser and downstream expander of Fig. 2
Fig. 4 is a schematic illustration of a steriliser and downstream expander according to a third embodiment of the present invention.
Fig. 5 is a schematic illustration of a steriliser and downstream expander according to a fourth embodiment of the present invention.
Fig. 6 is a schematic illustration of an expander according to a further embodiment of the present invention.

### Description of the invention and preferred embodiments

The present invention will be described with reference to certain embodiments and to certain drawings, but the invention is not limited thereto. These examples illustrate the invention only. The present invention will be described with reference to a steriliser and expansion of hot animal waste exiting from such a steriliser but the present invention is not limited thereto but may be applied to expansion of animal waste from any pressurised vessel.

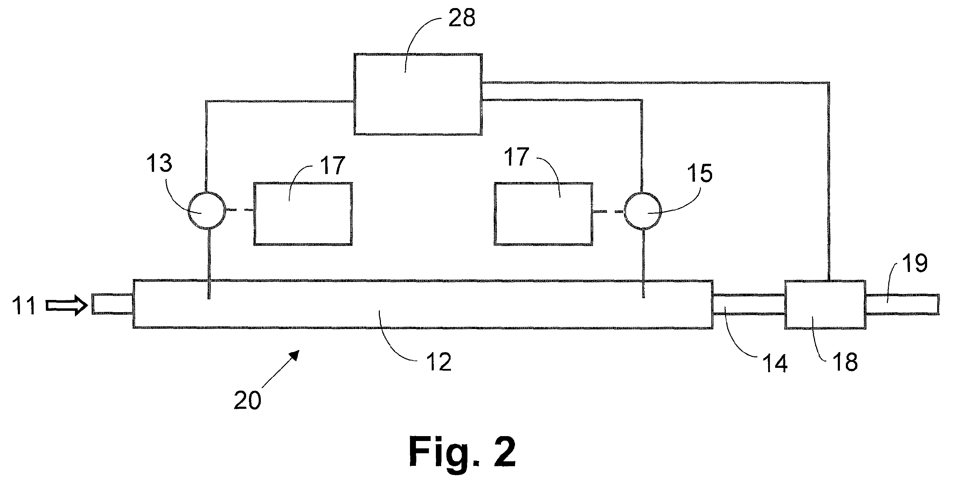

Fig. 2 is a schematic representation of part of a rendering system 20 for animal wastes. It comprises an input 11, e.g. from a pump attached to a crusher, a steriliser 12 having a pressure monitoring system represented by two pressure sensors 13 and 15 optionally associated with a pressure recording device 17. The steriliser 12 may be a tubular holding tube as known from EP 926 230. The output 14 of the steriliser is connected to a pressure reducing device or expander 18 which has an outlet 19 for discharging the processed sterilised material at a low pressure, e.g. atmospheric pressure. A controller 28 is provided for controlling the operation of expansion. The control system may be a mechanical, electrical, hydraulic or pneumatic control system or a hybrid system having any combination of these. The expander 18 includes a variable volume pressurisable accumulator unit for accumulating the sterilized pressurized animal waste at a first pressure and for discharging the accumulated sterilized pressurized animal waste at a second lower pressure. The exiting animal waste is typically at a temperature over 130°C and at a pressure above 3 bar so that the materials used in the construction of the accumulator unit should be able to withstand this temperature and pressure during long term use. The accumulator unit may include any suitable device which can receive a volume of processed material at first pressure and then discharge it. A suitable accumulator unit can include a deadweight, a spring operated, an air-operated or a hydraulic operated accumulator, for example. Particularly preferred is a cylinder with moveable piston. The expander 18 also includes a valve system connected to the inlet and outlet of the accumulator unit for controlling flow of sterilized pressurized animal waste from the steriliser 12 to the variable volume pressurisable accumulator and for controlling flow of sterilized pressurized animal waste from the accumulator outlet. A controller 28 is provided for controlling the operation of the valve system so that in a first phase the sterilized pressurized animal waste is accumulated in the accumulator unit at the first pressure and in a second phase the sterilized pressurized animal waste is prevented from entering the accumulator unit and is released from the accumulator outlet at the second pressure. The valve system may be mechanically, electrically, hydraulically or pneumatically operated or may be operated by a hybrid system using any combination of these. The controller 28 also receives signals from the pressure sensors 13 and/or 15 so that it can co-ordinate operation of the valve system so that pressure is maintained in the steriliser 12 at all times.

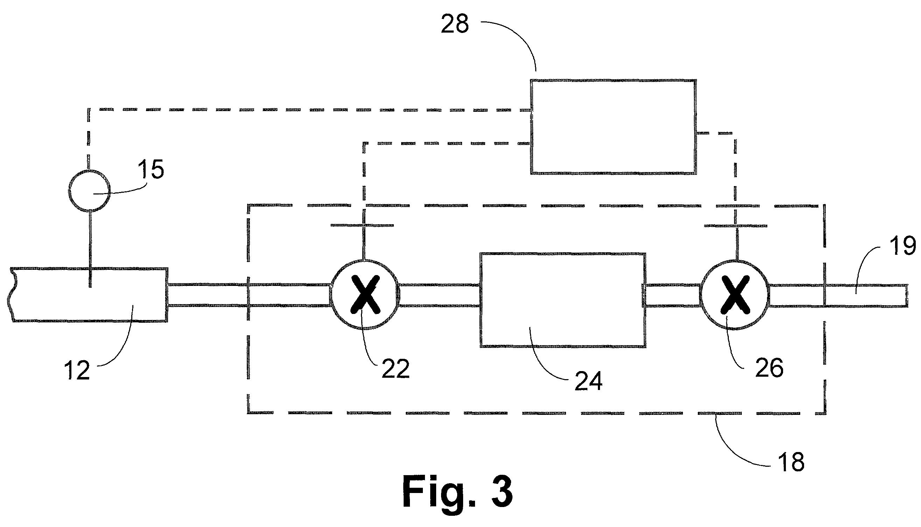

A detail of the system of Fig. 2 is shown in Fig. 3 in which the same reference numbers refer to the same components as in Fig. 2. The expander 18 includes two controllable valves 22 and 26 and the accumulator unit 24. The system operates in the following way. If the pressure sensed by sensor 15 is below a certain value, e.g. below 3.2 bar, the controller 28 closes valves 22, 26 and prevents any activation of valves 22, 26. When the operating pressure has been reached in the steriliser 12, e.g. 3.4 bar, the controller 28 controls the valves 22 and 26 in the following way. In a first phase, valve 26 is closed and valve 22 is opened. Processed material under pressure is then discharged from the steriliser 12 into the accumulator unit 24. The pressure in the steriliser 12 in this phase is maintained roughly constant or reduces in a controlled manner. This is achieved by the accumulator unit 24 only receiving material in a controlled way, e.g. if the pressure is above a certain value. Secondly, means for reducing and/or controlling the rate of transfer of material may be provided in the expander 18 so that the rate of pressure drop in the steriliser 12 is controlled, ideally such that time constants of the system and/or of sensors and controllers are shorter than the time taken to charge the accumulator unit 24 with material. Further, no material is lost or separated in the process of transfer, all sterilised material which enters the accumulator 24 is expelled from it, thus avoiding dead zones.

In a second phase, the controller 28 instructs the valve 22 to close and valve 26 to open. The material is now discharged from the accumulator unit 24. The discharge can be active or passive. In passive discharge an elastic element (e.g. a spring or a gas) compressed during the charging phase is allowed to expand and to thereby expel the accumulated material from the accumulator unit 24. In active discharge, the accumulator unit is driven, e.g. by injection of hydraulic fluid or gas, to expel the accumulated material faster than by passive discharge.

The cycle is repeated to provide a flow of material at low pressure from outlet 19.

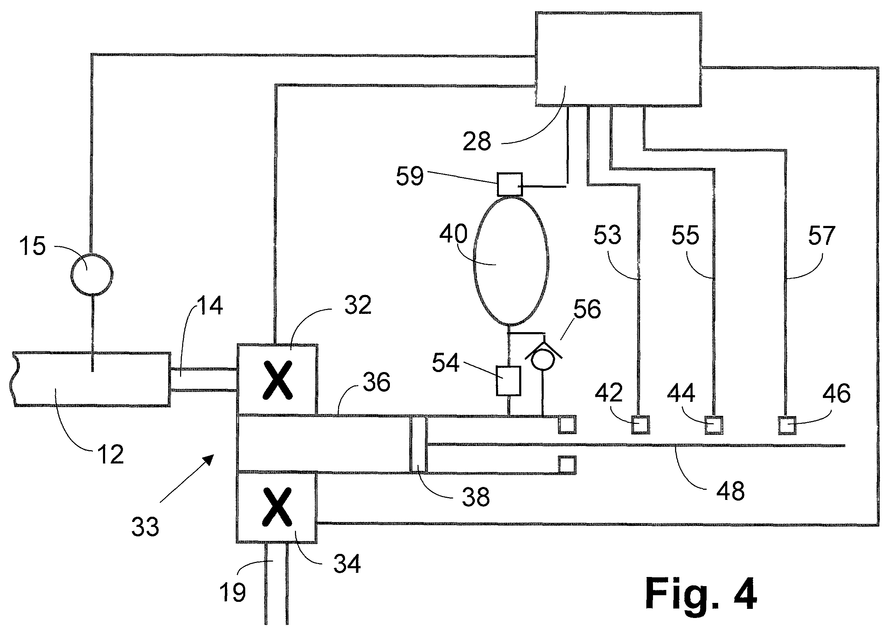

Fig. 4 shows a preferred embodiment of the present invention. Reference numbers in Fig. 4 which are the same as in Fig. 2 or 3 refer to the same components unless otherwise stated. The valve system has a manifold 33 which is connected to outlet 14 of the steriliser at one position and to outlet 19 at another. A first valve 32 is provided which controls the flow of material from the steriliser 12 to a cylinder 36 with moveable piston 38 and piston rod 48. A second valve 34 controls the flow from the cylinder 36 to the low pressure outlet 19. The system operates in the following way. When valve 32 is opened material from steriliser 12 flows into the cylinder 36. Cylinder 36 has a means for providing a back pressure, e.g. a spring operating on the piston 38 or a hydraulic storage accumulator 40 connected to the end of the cylinder remote from the valve 32. The accumulator can contain, for example, hydraulic fluid under pressure for pressurising the piston 38 to move to the left as well as a compressible gas volume separated from the hydraulic fluid by a flexible membrane. The pressure in the steriliser 12 is set at a higher pressure than the back pressure so the cylinder 36 begins to receive material. The speed at which the piston is allowed to move can be controlled, e.g. by means of a flow restrictor 54 in the pipeline to the accumulator 40 or by other means, e.g. by a mechanical damper connected between the cylinder 36 and the end of the cylinder rod 48. The cylinder 36 forms alone, or the cylinder and the accumulator 40 form together, an accumulator unit 24. Controlling the speed of movement of the piston 38 is important as it controls the rate of volume loss from the steriliser 12 and therefore the rate of pressure drop in the steriliser 12. Control mechanisms prevent excessive lowering of the pressure in the steriliser 12: if during the process, the pressure in steriliser 12 drops below a certain value e.g. 3.2 bar, the controller 28 closes valve 32. The end of the process of accumulation may be signaled by a proximity switch 46, e.g. a microswitch connected by a line 57 to the controller 28, which is tripped when the rod 48 reaches its end position. The proximity switch 46 sends a signal to controller 28 which then closes valve 32 and opens valve 34. The accumulated contents of the cylinder 36 then discharge through the opening 19 for further processing. The material is expelled either by means of the elastic energy stored in the system due to compression or by actively driving the piston 38, e.g. by pumping hydraulic fluid (active expulsion not shown in the figures). When the piston reaches its furthermost point left it triggers a further proximity switch 42 which is connected by line 53 to the controller 28. On receipt of this signal the controller closes valve 34 and opens valve 32.

The above control system is based on displacement, e.g. change in volume of the material in the accumulator unit 24. The present invention includes other control techniques. For example, a pressure control system may be used. For instance, a pressure sensor 59 may be used to monitor the pressure of the compressed fluid in storage accumulator 40. The process of charging the cylinder 36 is completed by so much material having been received in the cylinder 36 that the pressure rises in the accumulator 40 to a value X. When this has been reached the controller 28 closes valve 32 and opens valve 34. The piston 38 returns driven by the stored elastic energy in the accumulator 40 until it has reached its furthermost position left. The pressure drops to a value Y in the accumulator 40 which is measured by sensor 59 which triggers the controller 28 to close valve 34 and open valve 32. In order to increase the speed of discharge while still restricting the speed of charging, a bypass valve 56 may be placed in parallel with the flow restrictor 54.

For good functioning of the system the pressure/volume characteristic of the accumulator 40 should be set correctly. The pressure/volume characteristic (as well as the characteristics of the flow restrictor valve 54) should be chosen so that there is a pressure drop across valve 32 for all working pressures of the steriliser 12 with the lower pressure being on the side of the cylinder 36.

When discharging gaseous material at high pressure it may be preferable to include an intermediate expansion step rather than expanding directly from 3+ bar to atmospheric pressure. On method to achieve this is as follows. The valve 32 is first opened and the cylinder 36 receives material until a third proximity switch 44 connected to the controller 28 by line 55 is tripped by the cylinder rod 48. On receipt of this signal the controller 28 closes the valve 32. Under the effect of the gas under pressure in the cylinder the piston continues to move to the right until the proximity switch 46 is triggered. Then the controller 28 opens the valve 34. The effect of this is to provide an intermediate expansion step and to reduce the pressure drop across valve 34 when it is opened. Careful selection of the pressure/volume characteristic of the accumulator 40 and the flow restrictor 54 is required for proper operation. As the piston is moving back under the pressure from the steriliser 12, there is a pressure drop across the flow restrictor 54. Once the valve 32 closes this pressure drop across the restrictor decays as the piston moves back further towards the position in which the piston rod triggers the micorswitch 46.

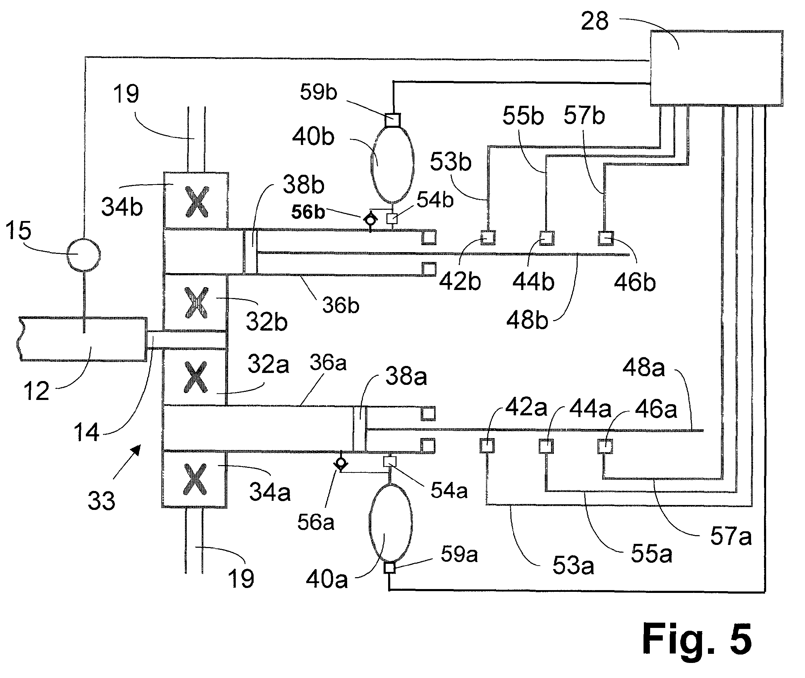

Fig. 5 shows a modification of the system shown in Fig. 4. Reference numbers in Fig. which are the same as in Fig. 4 have the same function. In Fig. 5 the pressurisable accumulator units have been duplicated in order to allow one to be charging when the other is discharging. This increases the throughput and makes the discharge from 19 more uniform in flow rate. The two parallel systems are indicated by an "a" or a "b" after the reference number. A more complicated manifold 33 is required. Operation of this embodiment of the present invention is as follows. Assuming the pressure sensor 15 indicates that the pressure in the steriliser 12 has reached its operating value, the controller 28 opens valve 32a allowing charging of the cylinder 36a. When the cylinder 36a is full the controller 28 closes valve 32a and opens valves 34a and 32b. This allows cylinder 36a to discharge to the outlet 19 and cylinder 36b to charge from the steriliser 12. Once cylinder 36a is empty and cylinder 36b is full, the controller 28 closes valves 32b, 34a and opens valves 32a, 34b. This allows cylinder 36b to discharge to outlet 19 and cylinder 36a to charge. In this way the cylinders 36a and b are operated alternatively to charge and discharge.

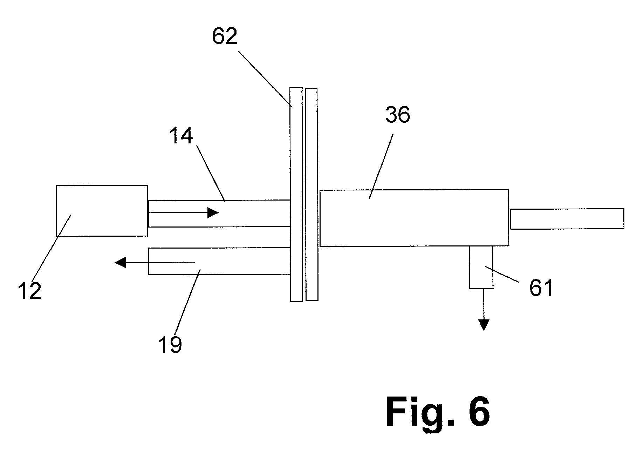

A preferred arrangement for the manifold 33 and the valves 32 and 34 is a manifold with a rotating valve. The valve rotates from a first position in which there is fluid contact between the steriliser 12 and the cylinder 36 and no fluid contact between the cylinder 36 and the outlet 19 to a second position in which there is no fluid contact between the cylinder 36 and the steriliser 12 and there is fluid contact between the cylinder 36 and the outlet 19. Preferably in between the two positions there is no fluid contact between the cylinder 36 and either the steriliser 12 or the outlet 19. Such a valve system is shown schematically in Fig. 6. Reference numeral 62 refers to a rotating valve comprising a fixed plate and rotating plate. An aperture in the rotating plate is lined up with the outlet 14 or 19 depending upon the position of the plate. Channels in the fixed plate provide the pathways for the animal waste. Item 61 is a pressure relief valve. If the pressure in the cylinder 36 gets too high the animal waste can be discharged through the pressure relief valve 61.

While the invention has been shown and described with reference to preferred embodiments, it will be understood by those skilled in the art that various changes or modifications in form and detail may be made without departing from the scope and spirit of this invention. For example, if the viscosity of the material is too high during processing water may be added. This may be achieved, for instance, by steam injection for heating the animal waste to be sterilised. If the viscosity is too low, thickeners may be added before sterilisation. Instead of using a tubular steriliser for both preheating and sterilisation, a separate preheater may be provided upstream of the steriliser.

## Claims

1. A pressure reducing apparatus for connection to a pressurised vessel for reducing the pressure of pressurized animal waste, comprising:
a variable volume pressurisable accumulator unit having an input and an output for accumulating the pressurized animal waste at a first pressure and for discharging the accumulated pressurized animal waste at a second lower pressure,
a valve system connected to the inlet and outlet of the accumulator unit and to the outlet of the pressurised vessel for controlling flow of pressurized animal waste from the pressurised vessel to the accumulator unit and for controlling flow of pressurized animal waste from an outlet accumulator unit, and
control means for controlling the operation of the valve system so that in a first phase the pressurized animal waste is transferred from the pressurised vessel and accumulated in the accumulator unit at the first pressure and in a second phase the pressurized animal waste is prevented from entering the accumulator unit from the pressurised vessel and is released from the outlet of the accumulator unit at the second pressure.

2. The pressure reducing apparatus according to claim 1, further comprising means to control the rate of transfer of pressurized animal waste from the pressurised vessel to the accumulator unit.

3. The pressure reducing apparatus according to claim 1 or 2, wherein the control means controls the operation of the valve system so that the waste material is released from the outlet of the accumulator unit when the accumulator unit has received a predetermined volume of animal waste from the pressurised vessel.

4. The pressure reducing apparatus according to claim 1 or 2, wherein the control means controls the operation of the valve system so that the waste material is released from the outlet of the accumulator unit when a pressure in the accumulator unit has reached a predetermined value.

5. The pressure reducing apparatus according to any previous claim wherein the accumulator unit includes a piston and cylinder.

6. The pressure reducing apparatus according to any previous claim, wherein the pressurised vessel is a steriliser and the animal waste is sterilised animal waste.

7. A rendering system for animal wastes including a pressure reducing apparatus according to any of claims 1 to 6.

8. A method of reducing pressure of pressurized animal waste from a pressurised vessel comprising:
in a first phase accumulating the pressurized animal waste from the pressurised vessel at a first pressure in a variable volume pressurisable accumulator unit, in a second phase preventing the pressurized animal waste from entering the accumulator unit from the pressurised vessel and discharging the accumulated sterilized pressurized animal waste at a second lower pressure.

9. The method according to claim 8, further comprising controlling the rate of transfer of pressurized animal waste from the pressurised vessel to the accumulator unit.

10. The method according to claim 8 or 9, further comprising releasing the animal waste from the outlet of the accumulator unit when the accumulator unit has received a predetermined volume of material from the pressurised vessel.

11. The method according to claim 8 or 9, further comprising releasing the animal waste from the outlet of the accumulator unit when a pressure in the accumulator unit has reached a predetermined value.
